# FASCICULE DE BREVET EUROPEEN

(11) **EP 2 520 789 B1**
(45) Date de publication et mention de la délivrance du brevet: **30.05.2018**
(21) Numéro de dépôt: 12305403.3
(22) Date de dépôt: 05.04.2012
(51) Int. Cl.: F02D 41/40, F02D 41/02, F02D 41/04

(54) **Procede de controle d'injection**
Injektionskontrollverfahren
Injection control method

(30) Priorité: 03.05.2011 FR 1153770
(43) Date de publication de la demande: 07.11.2012
(73) Titulaire: Renault S.A.S., 92100 Boulogne-Billancourt (FR)
(72) Inventeur: Ramseyer, Aurelien, 92100 Boulogne-Billancourt (FR); Guerry, Stephanie, 91750 CHAMPCUEIL (FR); Remingol, Mickael, 94200 IVRY-SUR-SEINE (FR); Rousset, Florence, 78350 JOUY-EN-JOSAS (FR)

(56) Documents cités:
- EP-A1- 1 541 844
- WO-A1-2008/136517
- US-A1- 2008 135 014

## Description

L'invention concerne un procédé de contrôle d'injection au cours des cycles de fonctionnement d'un moteur diesel.

L'invention concerne plus particulièrement un procédé de contrôle d'injection au cours des cycles de fonctionnement d'un moteur diesel équipé d'un filtre à particules dont au moins une chambre de combustion est alimenté par un système d'injection, notamment de type à rail commun, comportant au moins un injecteur susceptible de délivrer lors de chaque injection une première quantité minimale déterminée de carburant associée à une première durée minimale d'injection, ledit procédé obéissant à une cartographie d'injection théorique prédéterminée proposant pour chaque cycle une étape principale d'injection de carburant destiné à participer à la combustion au sein de ladite chambre de combustion et au moins une étape de post-injection de carburant, séparée de l'étape principale par un intervalle de temps déterminé, au cours de laquelle une deuxième quantité théorique de carburant déterminée, susceptible d'être injectée pendant une durée théorique d'injection de carburant, inférieure à la première durée minimale d'injection, doit être injectée pour fournir du carburant au filtre à particules afin de provoquer son élévation de température.

Un tel procédé de commande est connu de l'état de la technique.

En particulier, le document EP-A-1.541.844 décrit et représente un tel procédé. Le document WO 2008/136517 A1 décrit aussi des caractéristiques du procédé. Dans le document EP-A-1.541.844, un calculateur calcule la quantité adéquate de carburant devant être nécessairement injectée au cours d'une étape ou plusieurs étapes de post-injection de carburant afin de provoquer l'amorçage du filtre à particules du véhicule.

Selon les conditions de roulage du véhicule, la quantité de carburant devant être nécessairement injectée au cours de l'étape ou de chacune des étapes de post-injection de carburant peut être inférieure au débit minimum pouvant être effectivement réalisé par les injecteurs.

En ce cas, au cours de l'étape ou de chacune des étapes de post-injection de carburant le calculateur déclenche à chaque cycle l'injection effective d'une quantité de carburant correspondant à la quantité minimale de carburant pouvant être injectée par les injecteurs.

La conséquence de cette injection est d'une part une consommation inutile de carburant associée à un niveau de pollution élevé.

D'autre part, une autre conséquence de cette injection est une dilution élevée du film d'huile sur les parois des chambres de combustion. Le film d'huile présent sur les parois des chambres de combustion est dilué par le carburant injecté et il en résulte donc un défaut de lubrification du moteur.

L'invention propose de remédier à cet inconvénient en proposant un procédé du type décrit précédemment au cours duquel l'injection qui devrait être réalisée au cours de l'étape de post-injection de certains cycles est différée et additionnée à l'injection au cours d'un cycle ultérieur de manière que la quantité de carburant injectée effectivement sur la totalité des cycles au cours des étapes de post-injection corresponde à la quantité de carburant théoriquement injectée sur la totalité des cycles au cours des étapes de post-injection.

Dans ce but, l'invention propose un procédé du type décrit précédemment, caractérisé en ce que le procédé comporte répétitivement :
- une succession de cycles dits "simples" comportant une étape principale d'injection de carburant, et dépourvus d'étape de post-injection,
- un cycle dit "combiné" comportant une étape principale d'injection de carburant et comportant une étape de post-injection, qui est susceptible d'intervenir dès lors qu'un produit du nombre total de cycles intervenus depuis le dernier cycle combiné et de la deuxième durée est supérieur ou égal à la première durée, et au cours de laquelle on réalise au moins une injection de carburant d'une durée totale égale audit produit,
pour que la quantité totale de carburant injectée en post-injection pendant la durée déterminée, ramenée au nombre total de cycles intervenus depuis le dernier cycle combiné, corresponde sensiblement à la deuxième quantité théorique de carburant déterminée par cycle associée à la durée théorique d'injection et pour limiter le phénomène de dilution du carburant injecté dans l'huile moteur.

Selon d'autres caractéristiques de l'invention :
- le cycle dit "combiné" comporte une étape principale d'injection de carburant et une étape de post-injection au cours de laquelle on réalise un nombre déterminé d'injections successives, chacune d'une durée supérieure ou égale à la première durée minimale, et d'une durée totale égale audit produit,
- le nombre déterminé d'injections successives est déterminé de manière à minimiser la durée de carburant injecté à chaque injection, pour limiter le phénomène de dilution du carburant injecté dans l'huile moteur.
- la deuxième durée théorique d'injection de carburant déterminée est établie par la cartographie d'injection théorique prédéterminée en réponse à des informations représentatives du fonctionnement du moteur, notamment une information de régime, une information de couple indiqué, une information de température en entrée du filtre à particules, une information de température en entrée du filtre à particules, une information de température en entrée d'un turbocompresseur associé.

D'autres caractéristiques et avantages de l'invention apparaîtront à la lecture de la description détaillée qui suit pour la compréhension de laquelle on se reportera aux dessins annexés dans lesquels :
- la figure 1 est un diagramme schématique représentant les injections effectuées au cours de chaque cycle d'injection selon un procédé connu de l'état de la technique ;
- la figure 2 est un diagramme schématique représentant les injections effectuées au cours d'une série de cycles selon un premier mode d'exécution du procédé de l'invention,
- la figure 3 est un diagramme schématique représentant les injections effectuées au cours d'une série de cycles selon un second mode d'exécution du procédé de l'invention,

Dans la description qui va suivre, des chiffres de référence identiques désignent des pièces identiques ou ayant des fonctions similaires.

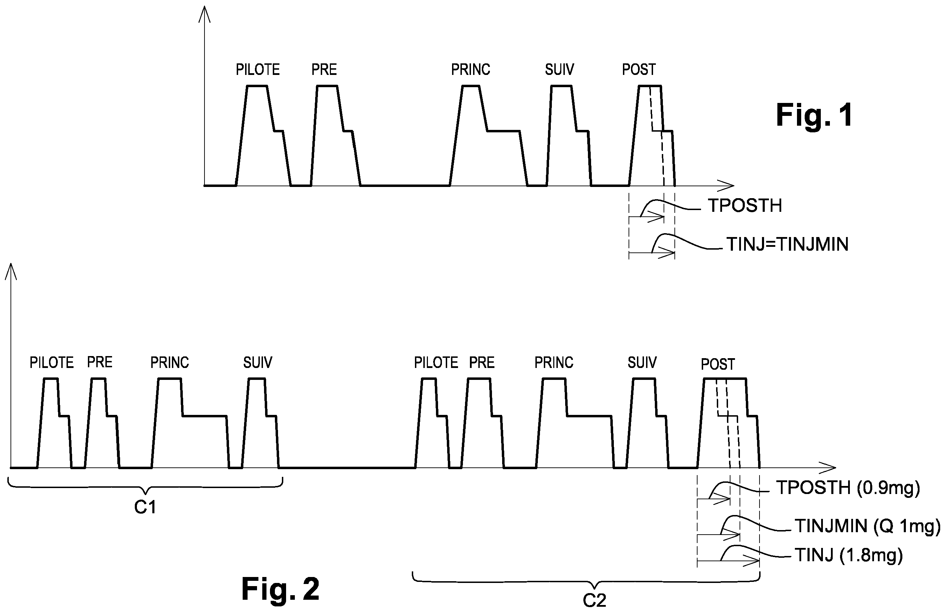

On a représenté à la figure 1 un diagramme illustrant un cycle d'injection d'un moteur diesel piloté par un procédé conforme à l'invention.

Comme l'illustre la figure 1, chaque cycle comporte :
- au moins une injection principale PRINC effectuée sensiblement lorsque le piston de la chambre associée atteint le point mort haut,
- une pré-injection PRE, intervenant avant l'injection principale PRINC, et effectuée suffisamment près de l'injection principale PRINC pour réaliser une continuité de combustion avec l'injection principale PRINC,
- une injection SUIV suivant l'injection principale PRINC, qui est effectuée suffisamment près de l'injection principale PRINC pour réaliser la continuité de la combustion avec l'injection principale PRINC ;
- une pré-injection PILOTE, précédant la pré-injection PRE, qui intervient lorsque le piston de la chambre associée est en phase de compression et est agencé sensiblement en avance du point mort haut de sorte qu'elle ne participe pas à la combustion du combustible injecté pendant la pré-injection PRE,
- au moins une injection POST suivant l'injection SUIV, et effectuée avec un retard déterminé par rapport au point mort haut pour ne pas participer à la combustion du combustible injecté pendant l'injection SUIV.

Chaque injection est réalisée suivant un débit proportionnel à la durée de l'injection. Le débit minimal de l'injecteur est associé à une première durée minimale d'injection "TINJMIN"

L'injection POST devrait être réalisée suivant la représentation en pointillés avec un débit théorique associé à une deuxième durée d'injection théorique TPOSTH, représentée en abscisses sur la figure 1, qui est ici inférieur au débit minimum associé à la première durée d'injection TINJMIN et effectivement réalisé par l'injecteur. De ce fait, l'injection réelle POST est réalisée suivant la représentation en traits forts avec un débit réel associé à une durée TINJ, représentée en abscisses sur la figure 1, qui est ici égale à la durée minimum TINJMIN correspondant au débit minimum effectivement réalisé par l'injecteur.

La conséquence de cette injection est d'une part une consommation inutile de carburant associée à un niveau de pollution élevé.

D'autre part, une autre conséquence de cette injection est une dilution élevée du film d'huile sur les parois des chambres de combustion. Le film d'huile présent sur les parois des chambres de combustion est dilué par le carburant injecté et il en résulte donc un défaut de lubrification du moteur.

L'invention propose de remédier à cet inconvénient en proposant un procédé du type décrit précédemment au cours duquel l'injection qui devrait être réalisée au cours de l'étape de post-injection de certains cycles est différée et additionnée à l'injection au cours d'un cycle ultérieur de manière que la quantité de carburant injectée effectivement sur la totalité des cycles au cours des étapes de post-injection corresponde à la quantité de carburant théoriquement injectée sur la totalité des cycles au cours des étapes de post-injection.

Dans ce but, l'invention propose un procédé du type décrit précédemment, caractérisé en ce que le procédé comporte répétitivement :
caractérisé en ce que le procédé comporte répétitivement :
   - une succession de cycles dits "simples" comportant une étape principale d'injection de carburant PRINC, et dépourvus d'étape de post-injection POST,
   - un cycle dit "combiné" comportant une étape principale d'injection de carburant PRINC et comportant une étape de post-injection POST, qui est susceptible d'intervenir dès lors qu'un produit du nombre total N de cycles intervenus depuis le dernier cycle combiné et de la deuxième durée TPOSTH est supérieur ou égal à la première durée TINJMIN, et au cours de laquelle on réalise au moins une injection de carburant d'une durée TINJ totale égale audit produit,
pour que la quantité totale de carburant injectée en post-injection, ramenée au nombre total de cycles intervenus depuis le dernier cycle combiné, corresponde sensiblement à la deuxième quantité théorique de carburant déterminée par cycle.

La figure 2 illustre une série de cycles selon ce procédé.

Dans cette configuration un utilise, à titre d'exemple et de manière non limitative de l'invention, un moteur équipé d'injecteurs susceptibles dont le débit minimal associé à une durée TINJMIN, correspondant à la première quantité, est de 1mg par injection.

Dans cette configuration, la cartographie d'injection propose pour chacun des cycles C1, C2 successifs, au cours de l'étape de post-injection de carburant POST, une deuxième quantité théorique injectée correspondant à une durée TPOSTH de carburant de 0.9 mg de carburant, quantité qui a été représentée en pointillés.

La deuxième quantité théorique de carburant déterminée, et donc la deuxième durée théorique d'injection associée, est établie par la cartographie d'injection théorique prédéterminée en réponse à des informations représentatives du fonctionnement du moteur, notamment une information de régime, une information de couple indiqué, une information de température en entrée du filtre à particules, une information de température en entrée du filtre à particules, une information de température en entrée d'un turbocompresseur associé.

Selon le procédé objet de l'invention, comme l'illustre en traits forts le diagramme de la figure 2, le premier cycle C1 est un cycle dit "simple" comportant une étape principale d'injection de carburant PRINC, et dépourvu d'étape de post-injection POST.

Au contraire le cycle suivant C2, est un cycle dit "combiné" comportant lui aussi une étape principale d'injection de carburant PRINC mais comportant une étape de post-injection POST.

Cette étape est susceptible d'intervenir dès lors qu'un produit du nombre total de cycles intervenus depuis le dernier cycle combiné et de la seconde quantité est supérieur ou égal à la première quantité, et au cours de laquelle on réalise au moins une injection d'une quantité de carburant totale égale audit produit,
Ici, deux cycles suffisent pour que le double de la seconde quantité, soit 1,8 mg, soit supérieur à la première quantité de 1mg. On va donc injecter une quantité de 1,8 mg de carburant au cours du cycle C2 pendant une durée TINJ double de la durée TPOSTH.

Au total, on aura donc injecté sur les deux cycles C1 et C2 une quantité de 0,9 mg par cycle, ce qui correspond à la proposition théorique de la cartographie d'injection, et l'injection réelle aura pu être réalisée puisqu'elle est supérieure à la quantité minimale pouvant être injectée.

Sans le procédé, il aurait été injecté la quantité de 1mg de carburant sur chacun des deux cycles, ce qui aurait conduit à injecter du carburant en excès par rapport aux préconisations de la cartographie.

L'avantage majeur du procédé est de permettre de n'injecter que la quantité de carburant nécessaire au bon fonctionnement du filtre à particules, ce qui limite les risques de pollution et le phénomène de dilution du carburant injecté dans l'huile moteur, donc les risques de mauvaise lubrification des chambres de combustion.

Bien entendu, il sera compris que l'étape de post-injection POST aurait pu être différée à un cycle ultérieur, mais avec un débit cumulé supérieur, par exemple un débit injecté 2.7 mg de carburant si elle était intervenue au bout d'un troisième cycle, on aurait, ou de 3.6 mg de carburant au bout d'un quatrième cycle.

Cette option n'a pas été représentée car l'augmentation du débit au cours d'une seule injection tend à aggraver le phénomène de dilution du carburant dans l'huile moteur.

Dans l'exemple de la figure 2, on a réalisé une seule injection différée au cours de l'étape POST de post-injection du cycle C2.

Or, le procédé faisant l'objet de l'invention permet aussi remédier de manière encore plus efficace aux risques de dilution du carburant injecté dans l'huile moteur, en effectuant plusieurs injections au cours de l'étape POST de post injection d'un cycle mixte.

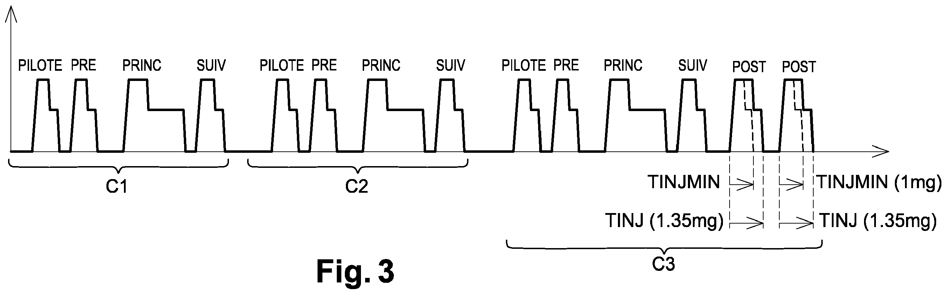

La figure 3 représente une telle configuration.

Dans cette configuration on utilise encore, à titre d'exemple et de manière non limitative de l'invention, un moteur équipé d'injecteurs susceptibles dont le débit minimal, correspondant à la première quantité, est de 1mg par injection.

Dans cette configuration, la cartographie d'injection propose pour chacun des cycles C1, C2, C3 successifs, au cours de l'étape de post-injection de carburant POST, une deuxième quantité théorique de carburant de 0.9 mg de carburant, quantité qui a été représentée en pointillés.

Selon le procédé objet de l'invention, comme l'illustre en traits forts le diagramme de la figure 2, le premier cycle C1 est un cycle dit "simple" comportant une étape principale d'injection de carburant PRINC, et dépourvu d'étape de post-injection POST.

Le deuxième cycle C2 est aussi un cycle dit "simple" comportant une étape principale d'injection de carburant PRINC, et dépourvu d'étape de post-injection POST.

Au contraire le cycle suivant C3, est un cycle dit "combiné" comportant lui aussi une étape principale d'injection de carburant PRINC mais comportant une étape de post-injection POST au cours de laquelle on injecte pendant trois durées TPOSTH au total trois fois la deuxième quantité théorique de 0.9 mg de carburant soit 2.7 mg.

Il serait possible, au cours de étape de post-injection POST, d'une manière similaire à ce qui a été évoqué en relation avec le premier mode de réalisation de réaliser, de réaliser une unique injection de 2.7 mg de carburant.

Conformément à l'invention, le cycle dit "combiné" comporte une étape principale d'injection de carburant PRINC et une étape de post-injection POST au cours de laquelle on réalise un nombre déterminé d'injections successives, chacune d'une quantité supérieure ou égale à la première quantité, et d'une quantité de carburant totale égale audit produit.

Ici on répartit la quantité de carburant de 2.7 mg à injecteur au cours de l'étape de post-injection POST en deux injections successives de durée TINJ de 1.35 mg, chacune étant d'une quantité supérieure égale à la première quantité.

Il sera compris que d'autres combinaisons sont en effet possibles. En effet, plus le cycle mixte est différé, plus la quantité de carburant à injecter au cours de ce cycle est élevée. Il est donc possible de réaliser plusieurs combinaisons différentes de nombres d'injections et de débits associés à ces injections.

De plus il n'est pas nécessaire que les débits des injections d'une même étape de post-injection POST soient égaux. Il suffit que chaque débit soit supérieur ou égal au débit associé à la première quantité et donc que chaque durée soit supérieure ou égale à la première durée TINJMIN.

Quoiqu'il en soit, le nombre déterminé d'injections successives est en tout état de cause déterminé de manière à minimiser la quantité de carburant injecté à chaque injection, pour limiter le phénomène de dilution du carburant injecté dans l'huile moteur.

L'invention permet donc de remédier aux problématiques de pollution et de dilution du carburant causées par l'existence d'un débit minimum des injecteurs.

## Revendications

1. Procédé de contrôle d'injection au cours des cycles de fonctionnement d'un moteur diesel équipé d'un filtre à particules dont au moins une chambre de combustion est alimentée par un système d'injection, notamment de type à rail commun, comportant au moins un injecteur susceptible de délivrer lors de chaque injection une première quantité minimale déterminée de carburant associée à une première durée minimale d'injection (TINJMIN), ledit procédé obéissant à une cartographie d'injection théorique prédéterminée proposant pour chaque cycle une étape principale d'injection de carburant (PRINC) destiné à participer à la combustion au sein de ladite chambre de combustion et au moins une étape de post-injection de carburant (POST), séparée de l'étape principale (PRINC) par un intervalle de temps déterminé, au cours de laquelle une deuxième quantité théorique de carburant déterminée, susceptible d'être injectée pendant une deuxième durée théorique (TPOSTH) d'injection de carburant, inférieure à la première durée minimale d'injection (TINJMIN), doit être injectée pour fournir du carburant au filtre à particules afin de provoquer son élévation de température, le procédé comportant répétitivement :
- une succession de cycles dits "simples" comportant une étape principale d'injection de carburant (PRINC), et dépourvus d'étape de post-injection (POST),
- un cycle dit "combiné" comportant une étape principale d'injection de carburant (PRINC) et comportant une étape de post-injection (POST), au cours de laquelle on réalise au moins une injection de carburant d'une durée (TINJ) totale égale au produit du nombre total (N) de cycles intervenus depuis le dernier cycle combiné et de la deuxième durée (TPOSTH),
**CARACTERISE EN CE QUE**
l'étape de post-injection (POST) est susceptible d'intervenir dès lors que ledit produit du nombre total (N) de cycles intervenus depuis le dernier cycle combiné et de la deuxième durée (TPOSTH) est supérieur ou égal à la première durée (TINJMIN), pour que la quantité totale de carburant injectée en post-injection pendant la durée déterminée (TINJ), ramenée au nombre total (N) de cycles intervenus depuis le dernier cycle combiné, corresponde sensiblement à la deuxième quantité théorique de carburant déterminée par cycle associée à la durée théorique d'injection (TPOSTH) et pour limiter le phénomène de dilution du carburant injecté dans l'huile moteur.

2. Procédé de contrôle d'injection selon la revendication précédente, **caractérisé en ce que** le cycle dit "combiné" comporte une étape principale d'injection de carburant (PRINC) et une étape de post-injection (POST) au cours de laquelle on réalise un nombre déterminé d'injections (TINJ) successives, chacune d'une durée supérieure ou égale à la première durée minimale (TINJMIN), et d'une durée totale égale audit produit (TPOSTTH).

3. Procédé de contrôle d'injection selon la revendication précédente, **caractérisé en ce que** le nombre déterminé d'injections successives est déterminé de manière à minimiser la durée (TINJ) de carburant injecté à chaque injection, pour limiter le phénomène de dilution du carburant injecté dans l'huile moteur.

4. Procédé de contrôle d'injection selon la revendication précédente, **caractérisé en ce que** la deuxième durée théorique de carburant déterminée (TPOSTH) est établie par la cartographie d'injection théorique prédéterminée en réponse à des informations représentatives du fonctionnement du moteur, notamment une information de régime, une information de couple indiqué, une information de température en entrée du filtre à particules, une information de température en entrée du filtre à particules, une information de température en entrée d'un turbocompresseur associé.

## Patentansprüche

1. Verfahren zur Steuerung der Einspritzung während der Funktionszyklen eines Dieselmotors, der mit einem Partikelfilter ausgerüstet ist, von dem mindestens ein Brennraum von einem Einspritzsystem versorgt wird, insbesondere des Common-Rail-Typs, umfassend mindestens eine Einspritzdüse, die geeignet ist, bei jeder Einspritzung eine erste bestimmte Mindestkraftstoffmenge zu liefern, die mit einer ersten Mindest-Einspritzdauer (TINJMIN) in Verbindung steht, wobei das Verfahren einer vorbestimmten theoretischen Einspritzkartographie folgt, die für jeden Zyklus einen Haupt-Kraftstoffeinspritzschritt (PRINC) vorschlägt, der dazu bestimmt ist, an der Verbrennung innerhalb des Brennraums mitzuwirken, und mindestens einen Schritt der Kraftstoffnacheinspritzung (POST), der durch ein bestimmtes Zeitintervall von dem Hauptschritt (PRINC) getrennt ist, während welchem eine zweite bestimmte theoretische Kraftstoffmenge, die möglicherweise während einer zweiten theoretischen Kraftstoffeinspritzdauer (TPOSTH), die niedriger als die erste Mindesteinspritzdauer (TINJMIN) ist, eingespritzt wird, eingespritzt werden soll, um Kraftstoff an den Partikelfilter zu liefern, um dessen Temperaturerhöhung zu bewirken, das Verfahren wiederholt umfassend:
- eine Abfolge von "einfachen" Zyklen, die einen Haupt-Kraftstoffeinspritzschritt (PRINC) und keinen Schritt der Kraftstoffnacheinspritzung (POST) umfassen,
- einen "kombinierten" Zyklus, der einen Haupt-Kraftstoffeinspritzschritt (PRINC) umfasst und einen Schritt der Kraftstoffnacheinspritzung (POST) umfasst, während welchem mindestens eine Kraftstoffeinspritzung durchgeführt wird, deren Gesamtdauer (TINJ) gleich dem Produkt der Gesamtzahl (N) von Zyklen, die seit dem letzten kombinierten Zyklus stattgefunden haben, und der zweiten Dauer (TPOSTH) ist,
**dadurch gekennzeichnet, dass**
der Schritt der Nacheinspritzung (POST) stattfinden kann, sobald das Produkt der Gesamtzahl (N) von Zyklen, die seit dem letzten kombinierten Zyklus stattgefunden haben, und der zweiten Dauer (TPOSTH) größer oder gleich der ersten Dauer (TINJMIN) ist, damit die in der Nacheinspritzung während der bestimmten Dauer (TINJ) eingespritzte Gesamtkraftstoffmenge, die auf die Gesamtzahl (N) von Zyklen zurückgebracht ist, die seit dem letzten kombinierten Zyklus stattgefunden haben, im Wesentlichen der zweiten theoretischen Kraftstoffmenge entspricht, die durch einen Zyklus bestimmt wird, die mit der theoretischen Einspritzdauer (TPOSTH) in Verbindung steht, und um das Phänomen der Verdünnung von eingespritztem Kraftstoff im Motoröl zu begrenzen.

2. Verfahren zur Steuerung der Einspritzung nach dem vorhergehenden Anspruch, **dadurch gekennzeichnet, dass** der "kombinierte" Zyklus einen Haupt-Kraftstoffeinspritzschritt (PRINC) und einen Schritt der Nacheinspritzung (POST) umfasst, während welchem eine bestimmte Anzahl von aufeinanderfolgenden Einspritzungen (TINJ) durchgeführt wird, die jeweils eine Dauer größer oder gleich der ersten Mindestdauer (TINJMIN) und eine Gesamtdauer gleich dem Produkt (TPOSTTH) aufweisen.

3. Verfahren zur Steuerung der Einspritzung nach dem vorhergehenden Anspruch, **dadurch gekennzeichnet, dass** die bestimmte Anzahl von aufeinanderfolgenden Einspritzungen bestimmt wird, um die Dauer (TINJ) für eingespritzten Kraftstoffs bei jeder Einspritzung zu minimieren, um das Phänomen der Verdünnung von eingespritztem Kraftstoff im Motoröl zu begrenzen.

4. Verfahren zur Steuerung der Einspritzung nach dem vorhergehenden Anspruch, **dadurch gekennzeichnet, dass** die zweite bestimmte theoretische Gesamtkraftstoffdauer (TPOSTH) durch die vorbestimmte theoretische Einspritzkartographie in Reaktion auf Informationen festgelegt wird, die die Motorfunktion darstellen, insbesondere eine Information zur Drehzahl, eine Information zum indizierten Drehmoment, eine Information zur Temperatur am Eingang des Partikelfilters, eine Information zur Temperatur am Eingang des Partikelfilters, eine Information zur Temperatur am Eingang eines zugehörigen Turboladers.

## Claims

1. Method for controlling injection during the operating cycles of a diesel engine equipped with a particulate filter, at least one combustion chamber of which is fed by an injection system, notably of the common rail type, comprising at least one injector capable, during each injection, of delivering a first determined minimum quantity of fuel associated with a first minimum duration of injection (TINJMIN), the said method obeying a predetermined theoretical injection map which, for each cycle, proposes a main fuel injection step (PRINC) injecting fuel intended to participate in combustion within the said combustion chamber and at least one fuel post-injection step (POST), separated from the main step (PRINC) by determined interval of time, during which step a second determined theoretical quantity of fuel, capable of being injected during a second theoretical fuel-injection duration (TPOSTH) less than the first minimum injection duration (TINJMIN), needs to be injected in order to supply fuel to the particulate filter in order to raise the temperature thereof, the method comprising repetitively:
- a succession of cycles referred to as "simple" cycles, comprising a main fuel injection step (PRINC) and having no post-injection step (POST),
- a cycle referred to as "combined" cycle comprising a main fuel injection step (PRINC) and comprising a post-injection step (POST), during which at least one fuel injection of a total duration (TINJ) equal to the product of the total number (N) of cycles that have occurred since the last combined cycle and of the second duration (TPOSTH) is performed,
**CHARACTERIZED IN THAT**
the post-injection step (POST) is liable to occur as soon as the said product of the total number (N) of cycles that have occurred since the last combined cycle and of the second duration (TPOSTH) is greater than or equal to the first duration (TINJMIN), so that the total quantity of fuel injected as post-injection for the predetermined duration (TINJ), in relation to the total number (N) of cycles that have occurred since the last combined cycle, corresponds substantially to the second determined theoretical quantity of fuel per cycle associated with the theoretical injection duration (TPOSTH) and so as to limit the phenomenon of dilution of the fuel injected in the engine oil.

2. Method for controlling injection according to the preceding claim, **characterized in that** the cycle referred to as a "combined" cycle comprises a main fuel injection step (PRINC) and a post-injection step (POST) during which a determined number of successive injections (TINJ) are performed, each with a duration greater than or equal to the first minimum duration (TINJMIN), and with a total duration equal to the said product (TPOSTTH).

3. Method for controlling injection according to the preceding claim, **characterized in that** the determined number of successive injections is determined in such a way as to minimize the duration (TINJ) for which fuel is injected upon each injection, so as to limit the phenomenon of dilution of the fuel injected in the engine oil.

4. Method for controlling injection according to the preceding claim, **characterized in that** the second determined theoretical duration of fuel (TPOSTH) is established by the predetermined theoretical injection map in response to information indicative of the operation of the engine, notably information concerning engine speed, information concerning indicated torque, information concerning particulate filter inlet temperature, information concerning particulate filter inlet temperature, information concerning inlet temperature of an associated turbocompressor.
